# EUROPEAN PATENT APPLICATION

(11) **EP 2 009 884 A1**
(43) Date of publication of application: **31.12.2008**
(21) Application number: 07012804.6
(22) Date of filing: 29.06.2007
(51) Int. Cl.: H04M 1/725, G06K 19/07, H04B 1/38

(54) **Data storage device with means for communicating with a mobile network**

(71) Applicant: Koninklijke KPN N.V., 2516 CK The Hague (NL)
(72) Inventor: Annaka, Marcel Lucien, 1181 EP Amstelveen (NL)
(74) Representative: Wuyts, Koenraad Maria

(57) **Abstract**

The invention relates to a mobile data communications device (1,1a) comprising first data communication means (4), second data communications means (6,26) and a processing unit (8). The mobile data communications device (1,1a) is provided with and/or connectable to a data storage device (1b) having a memory (2). The first data communication means (4) are arranged for communicating data stored in the data storage device (1b,2) to a data reading device (12). The second data communications means (6,26) are arranged for communicating with a mobile communications network (14). The processing unit (8) is arranged for managing data stored in the memory (2) of the data storage device (1b) in response to a command or commands sent to the mobile data communications device (1,1a) via the mobile communications network (14).

## Description

The invention relates to a data storage device comprising a memory and data communication means arranged for communicating data stored in the memory of the data storage device to a data reading device.

Such data storage devices are known per se. An example of such storage device is a USB-memory-stick or an SD memory card. In the USB-memory-stick, a USB connector provides a communications connection via which a data reading device may access data stored in the memory of the USB-memory-stick.

These data storage devices are used for storing data, e.g. as a portable data storage means to allow easy transportation of (digital) data, such as data files, e.g. documents obtained by word-processing, digital images or digital audio or video files.

Additionally, the portable data storage devices are presently being used more-and-more as portable, external data storage for stand-alone and/or dedicated data reading devices such as digital photo-frames or (car) audio playback devices. It will be appreciated that these stand-alone and/or dedicated data reading devices are arranged to communicate with the known data storage device for accessing the memory of the data storage device.

The presently known data storage devices have the disadvantage that in order for the content of the memory to be managed, e.g. for moving data files to certain folders within the memory and/or for modifying the content of the memory, e.g. for deleting files from the memory and/or storing new files into the memory, the data communications means of the data storage device need to be disconnected from the stand-alone and/or dedicated data reading device and need to be connected to a control unit for managing the memory of the data storage device, such as a personal computer.

The invention aims to provide a solution to at least one of the above problems.

Thereto, according to the invention a data storage device is provided, comprising a memory, first data communication means, second data communications means, and a processing unit, wherein the first data communication means are arranged for communicating data stored in the memory of the data storage device to a data reading device, wherein the second data communications means are arranged for communicating with a mobile communications network, and wherein the processing unit is arranged for managing data stored in the memory of the data storage device in response to a command or commands sent to the mobile data communications device via the mobile communications network. It will be appreciated that data communication between the second data communication means and the mobile communications network is wireless data communication.

The first data communications means are preferably arranged such that the data reading device recognizes the data storage device according to the invention as a data storage device. According to the invention, the second data communications means allow the content of the memory of the data storage device to be managed in response to a command or commands sent to the mobile data communications device via the mobile communications network. This provides the advantage that the first data communications means need not be disconnected from the data reading device when the content of the memory is being managed. Further, this provides the advantage that the mobile communications network is used for managing the content of the memory, so that a wireless connection is made with the data storage device for managing the content of the memory, hence preventing additional cabling to be required.

Preferably, the data storage device is a portable data storage device. Preferably, the data storage device is arranged to be usable as an external memory for a stand-alone and/or dedicated data reading device. Preferably, the data storage device is a multi-purpose data storage device, such as for instance a USB-memory stick, SD card, miniSD card, microSD card, MMC card, CompactFlash card type I (CF I), CompactFlash card type II (CF II), Memory Stick PRO, MultiMediaCard, SmartMedia Card, Memory Stick Duo, xD-Picture Card, or Memory Stick PRO Duo.

Preferably, the processing unit is arranged for storing data received by the second data communications means into the memory of the data storage device and/or for communicating data stored in the memory of the data storage device to the mobile communications network in response to a command or commands sent to the data storage device via the mobile communications network. Thus, it is possible to modify the content of the memory, e.g. by deleting files from the memory and/or storing new files into the memory, via the mobile communications network and the second data communications means.

Preferably, the second data communications means are arranged to make a communications connection with the internet. Preferably the processing unit is arranged for storing data received from the internet into the memory of the data storage device and/or for communicating the data stored in the memory of the data storage device to the internet in response to a command or commands sent to the data storage device via the internet. Hence, it is possible to manage and/or modify the content of the memory via the internet. It is thus e.g. possible to send instructions and/or data files to the data storage device via email or via a dedicated internet website.

In an embodiment the first data communications means comprise a wired connector, such as a USB connector. Thus it is possible to wiredly connect the data storage device to one of a myriad of mutually different stand-alone and/or dedicated data reading devices such as digital photo frames, (car) audio playback devices, video playback devices, digital cameras, navigation devices, etc. It is also possible that the first data communications means comprise a plurality of mutually different wired connectors. Thus, the first data communications means may comprise one or more connectors for connection to one or more of USB, SD, miniSD, microSD, MMC, CompactFlash type I (CF I), CompactFlash type II (CF II), Memory Stick PRO, MultiMediaCard, SmartMedia Card, Memory Stick Duo, xD-Picture Card, or Memory Stick PRO Duo receptacles. Herein the connecting portion of such data storage device, i.e. the portion arranged to mate with and provide a communications connection with the respective receptacle, is referred to as connector. Thus, e.g. the connecting portion of an SD memory card, i.e. the portion designed to mate with and provide a communications connection with an SD receptacle, is referred to as SD connector.

Preferably, the data storage device is provided with a unique identification code for recognising the data storage device within the mobile communications network. Hence it is possible to selectively send commands and/or data to the data storage device via the mobile communications network.

In an embodiment the second data communications means are arranged to establish a communications connection with a substantially omnipresent bi-directional mobile communications network, such as GSM, GPRS, UMTS or HSDPA. Thus, a user need not himself provide a sender/receiver connected to a control unit, such as a personal computer, for communication with the second data communications means. Further, the user need not apply complex settings in order to establish the communications connection, a simple identification code (e.g. user name, telephone number and/or password) suffices.

Preferably the substantially omnipresent bi-directional mobile communications network is an ubiquitous network, which may comprise one or more, optionally different, communications networks, which ubiquitous network allows data communication for substantially any communications device such as mobile telephones, PDAs (Personal Digital Assistants), navigational devices, desktop computers, mobile computers, etc., anywhere, and at any time.

It will be appreciated that the user would have to provide such sender/receiver connected to the control unit if the second data communications means are arranged to establish a communications connection with a localised communications network, using technologies such as for instance WiFi or Bluetooth.

Further using the substantially omnipresent bi-directional mobile communications network provides the advantage that the memory of the data storage device may be managed from extremely remote locations. It is for instance possible to upload digital photographs to the memory of the data storage device connected to a digital photo frame of relatives abroad.

Preferably, the data storage device comprises a subscriber identity module (SIM) card storing the unique identification code. Thus it is e.g. possible to use a conventional SIM-card to identify the data storage device in the mobile communications network.

It is possible for a provider of a mobile communications network to grant a user access to the data storage device according to the invention. Such access can be charged to accounts associated with the respective data storage device, e.g. based on SIM-card information. Hence, it is possible to provide user subscriptions, e.g. on the basis of fixed fees per period of time and/or on the basis of the amount of data sent to and/or retrieved from the data storage device. Charging for the services could for instance be based on pre-paid or post-paid agreements.

The invention also relates to a mobile data communications device which is connectable to a (regular) data storage device, such that an assembly comprising the mobile data communications device and the (regular) data storage device represents the data storage device according to the invention.

Herein the "regular data storage device" is understood to be a known per se data storage device, e.g. a data storage device without the second data communications means according to the invention. It will be appreciated that, if so desired, the mobile data communications device according to the invention may also be connected to a data storage device according to the invention.It will be appreciated that the mobile data communications device connected to or provided with the (regular) data storage device can also be seen as a data storage device according to the invention.

Hence, according to the invention a mobile data communications device is provided, comprising first data communication means, second data communications means, and a processing unit, wherein the mobile data communications device is provided with and/or connectable to a (regular) data storage device having a memory, wherein the first data communication means are arranged for communicating data stored in the memory of the (regular) data storage device to a data reading device, wherein the second data communications means are arranged for communicating with a mobile communications network, and wherein the processing unit is arranged for managing data stored in the memory of the (regular) data storage device in response to a command or commands sent to the mobile data communications device via the mobile communications network.

The mobile data communications device is, thus, arranged to allow communication between the data reading device and the (regular) data storage device, so that the data reading device (re)acts as if only the (regular) data storage device were connected to the data reading device. Further, the mobile data communications device is arranged for managing data stored in the memory of the (regular) data storage device in response to a command or commands sent to the mobile data communications device via the mobile communications network.

It will be appreciated that embodiments, preferences and advantages recited with respect to the data storage device according to the invention hereinabove are also applicable to the mobile data communications device according to the invention, mutatis mutandis.

In an embodiment the mobile data communications device further comprises third data communications means, wherein the mobile data communications device is connectable to the (regular) data storage device via the third data communications means.

In an embodiment the first and third data communications means are wired connectors, so that the mobile data communications device can be communicatively and wiredly connected to both the (regular) data storage device and the data reading device. In an advanced embodiment, the mobile data communications device may be designed as a plug-in device, e.g. provided with a connector of a first gender, e.g. a male USB connector, for connection to the data reading device and a connector of a second gender, e.g. a female USB connector, for connection to the (regular) data storage device, e.g. the (regular) USB-memory-stick.

It will be appreciated that the mobile data communications device may be designed as a multi-purpose mobile data communications device wherein the first and third data communications means comprise a male and/or female part of at least one of USB, SD, miniSD, microSD, MMC, CompactFlash type I (CF I), CompactFlash type II (CF II), Memory Stick PRO, MultiMediaCard, SmartMedia Card, Memory Stick Duo, xD-Picture Card, or Memory Stick PRO Duo connectors.

The invention further relates to a data storage system comprising a control unit and a mobile communications network sender/receiver, for instance a substantially omnipresent mobile communications network sender/receiver, such as a GSM, GPRS, UMTS or HSDPA sender/receiver,wherein the control unit is communicatively connectable to the mobile communication network sender/receiver, further comprising an assembly of a mobile data communications device according to the invention and a (regular) data storage device, and/or a data storage device according to the invention, wherein the data storage system is arranged to transmit a command from the control unit to the second data communications means via the mobile communications network sender/receiver, for managing the data stored in the memory.

The invention further relates to a method for managing data in the memory of a data storage device, comprising establishing via a mobile communications network, for instance a substantially omnipresent mobile communications network such as GSM, GPRS, UMTS or HSDPA, a data communication with an assembly of a mobile data communications device according to the invention and a (regular) data storage device, and/or a data storage device according to the invention; and sending via the mobile communications network a command to the second data communications means, for managing the data stored in the memory.

The invention will now be further elucidated by means of, nonlimiting, examples and the accompanying drawing, in which
Fig. 1a shows a schematic representation of a data storage device according to the invention;
Fig. 1b shows a schematic representation of a possible use of the storage device of Fig. 1a in a data storage system;
Fig. 1c shows a schematic representation of a mobile data communications device according to the invention;
Fig 2a shows a first embodiment of a data storage device according to the invention;
Fig 2b shows a second embodiment of a data storage device according to the invention; and
Fig. 2c shows an embodiment of a mobile data communications device according to the invention.

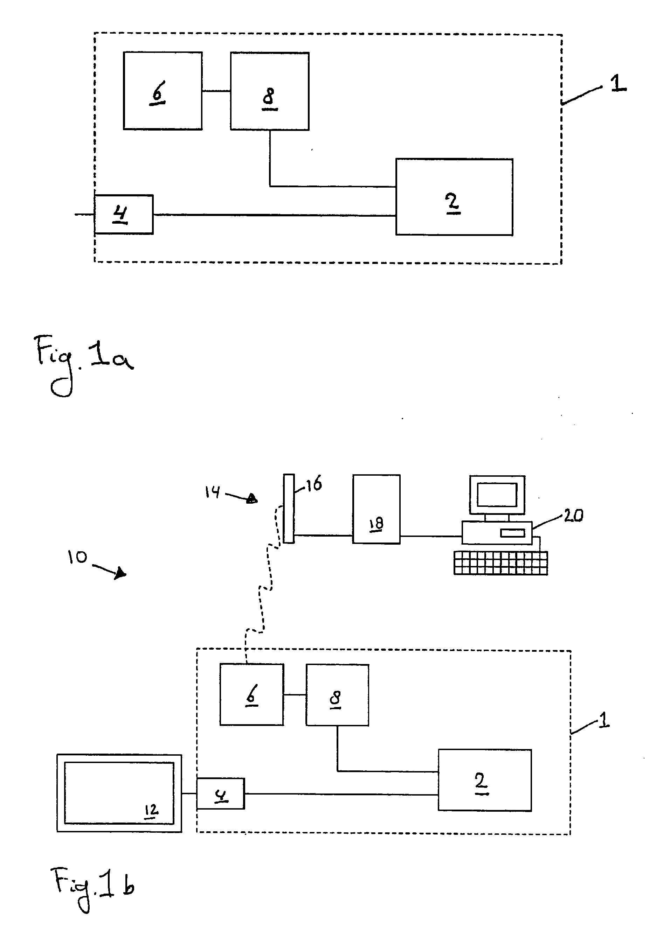

Fig. 1a shows a schematic representation of a data storage device 1 according to the invention. In this example, the data storage device 1 comprises a memory 2, first data communication means 4, second data communications means 6 and a processing unit 8. As described in the introduction, the data storage device according to the invention can also be seen as a mobile data communications device 1 provided with a (regular) data storage device.

Fig. 1b shows a schematic representation of a possible use of the storage device of Fig. 1a in a data storage system 10.

In Figs. 1a and 1b the first data communication means 4 are arranged to be communicatively connected to a data reading device 12. In this example the data reading device is a digital photo frame for displaying digital images stored in the memory 2 of the data storage device 1. The data reading device 12 may thus access the memory 2 of the data storage device 1. The communications connection between the data reading device 12 and the first data communications means 4 is in this example a wired connection. The data storage device 1 may, thereto, be provided with a connector to be received by a receptacle of the data reading device 12. In a practical embodiment, thereto, the data storage device 1 may be designed as a USB-memory-stick or an SD memory card, as will be further elucidated below.

In Figs. 1a and 1b the second data communications means 6 are arranged for communicating with a mobile communications network 14. In this example, the mobile communication network 14 is a substantially omnipresent bi-directional mobile communications network, in this example a UMTS network. Thereto, the second data communications means 6 is, in this example, designed as a UMTS sender/receiver which communicates with a remote UMTS sender/receiver station. The remote UMTS sender/receiver station is an example of a mobile communications network sender/receiver station 16. Here the UMTS network is an example of a ubiquitous network which allows data communication for substantially any communications device such as mobile telephones, PDAs (Personal Digital Assistants), navigation devices, desktop computers, mobile computers, etc., anywhere, and at any time.

In this example the UMTS sender/receiver station 16 is communicatively connected to an internet server 18. In this example the internet server 18 is communicatively connected to a control unit 20, such as a personal computer.

Using the substantially omnipresent bi-directional mobile communications network 14, such as for instance GSM, GPRS, UMTS or HSDPA, provides the advantage that a user need not himself provide a sender/receiver connected to the control unit 20 for communication with the second data communications means 6. It will be appreciated that the user would have to provide such sender/receiver if the second data communications means 6 are arranged to establish a communications connection with a localised communications network, using technologies such as for instance WiFi or Bluetooth.

Further, using the substantially omnipresent bi-directional mobile communications network 14 provides the advantage that the memory 2 of the data storage device 1 may be managed from extremely remote locations. It is for instance possible to store digital photographs into the memory 2 of the data storage device 1 connected to a digital photo frame 12 of relatives abroad.

Even further, using the substantially omnipresent mobile communications network 14 provides great versatility, as the location of the data storage device 1 and the location of the control unit 20, may be chosen and varied at will, without modifying the operation of the system 10.

The date storage device 1, and the data storage system 10, described thus far may be used as follows.

The data storage device 1 is connected to the data reading device 12, using the first data communications means 4.

On the personal computer 20, a digital image is selected, which image is to be displayed on the digital photo frame 12. The selected digital image is uploaded to the internet server 18. Also, in this example the data storage device 1 which is intended to receive the image is indicated to the internet server 18. Thereto, the data storage device 1 is in this example provided with a unique identification code for recognising the data storage device within the mobile communications network. In this example the unique identification code is stored in the memory 2 of the data storage device. It will be appreciated that the unique identification code may also be stored in the processing unit 8.Using the substantially omnipresent bi-directional mobile communications network further provides the advantage that a user need not apply settings in order to establish the communications connection, a simple identification code (e.g. user name, telephone number and/or password) suffices.

The internet server 18 transmits the digital image to the mobile communications network sender/receiver station 16. The internet server 18 also indicates the intended receiving data storage device 1 to the mobile communications network sender/receiver station 16. The mobile communications network sender/receiver station 16 transmits the digital image to the second data communications means 6 using the mobile communications network 14. The processing unit 8 stores the digital image in the memory 2 of the data storage device 1.

Here exclusively the image may be transmitted to the data storage device, wherein the processing unit 20 of the data storage device 1 interprets the reception of the image as a command to store the image in the memory 2. It is also possible that besides the image a separate command or separate commands are transmitted to the data storage device 1 in order to indicate to the storage device 1 that the image must be stored in the memory 2, and e.g. in what location of the memory.

Once the image is stored in the memory 2, the data reading device 12, here the photo frame, detects that the image is present in the memory 2 and will react accordingly. In this example the photo frame is programmed to display all images in the memory 2 of the data storage device 1, e.g. in succession, so that the image transmitted to the data storage device, once stored in the memory 2 will also be displayed.

From the point of view of the user, the above system 10 may be operated in a very simple manner. The user may for instance send an email message with a file or a plurality of files, such as the image or images, as attachment to a predetermined email address associated with the data storage device 1. The system 10 then takes care that the attached file(s) is (are) transmitted to the second data communications means 6 via the mobile communications network. The processing means 8 store the file(s) in the memory 2 of the data storage device 1.

It is also possible that an internet website is available, wherein the user, e.g. after login with a password, can upload a file or files from the control unit 20 to the internet server. Again, the system 10 then takes care that the uploaded file(s) is (are) transmitted to the second data communications means 6 via the mobile communications network. The processing means 8 store the file(s) in the memory 2 of the data storage device 1.

It is also possible that the system 10 is arranged to create an on-line connection between the data storage device 1 and the control unit 20. Hence, it is possible to manage data in the memory 2 of the data storage device 1 in real-time. The on-line connection could be designed as a, e.g. secure, internet connection. Alternatively, a computer program product could be provided which, when executed on the control unit 20 provides a virtual data storage device to the control unit. That is, the control unit (re)acts as if the data storage device 1 were directly connected to the control unit via the first data communications means 4.

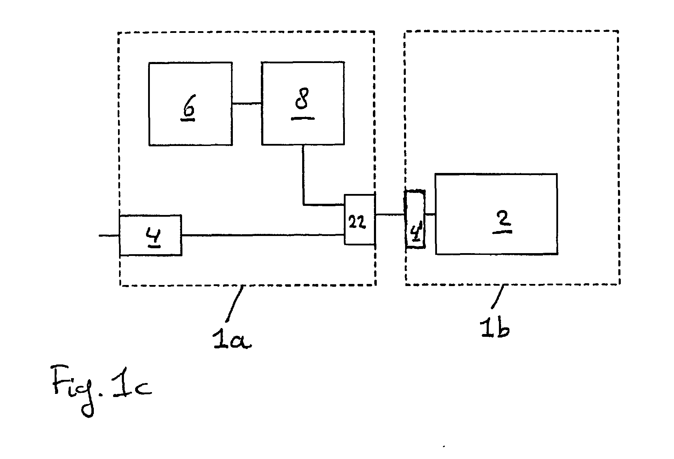

Fig. 1c shows a schematic representation of a mobile data communications device 1a according to the invention and a data storage device 1b. It will be appreciated that the functionality of data communications and the functionality of data storage of the data storage device 1 shown in Figs. 1a and 1b may also be performed by separate entities, without deviating from the scope of the invention.

In Fig. 1c a data storage device 1b having the memory 2 is shown. This data storage device 1b may be a known per se data storage device, e.g. a data storage device without the second data communications means 6 according to the invention. The data storage device 1b will herein be referred to as "regular data storage device 1b". It will be appreciated that, if so desired, the data storage device 1b may actually be a data storage device according to the invention.

In Fig. 1c the mobile data communication device 1a comprises the first data communication means 4, the second data communications means 6 and the processing unit 8. The mobile data communications device 1a further comprises third data communications means 22. The mobile data communications device 1a is connectable to the regular data storage device 1b via the third data communications means 22 and first data communication means 4' of the regular data storage device 1b.

When the regular data storage device 1b is connected to the mobile data communication device 1a, the assembly of the mobile data communication device 1a and the regular data storage device 1b operates in a way identical, or at least similar, to the data storage device 1 shown in Figs. 1a and 1b. Hence, the assembly can be operated in the system 10 of Fig. 1b in a way identical, or at least similar, to the data storage device 1, mutatis mutandis. In the example of Fig. 1c the processor 8 of the mobile data communications device 1a is arranged to manage the memory 2 of the regular data storage device 1b.

The data reading device 12 will react to the assembly of the mobile data communications device 1a and the regular data storage device 1b, as if only the regular data storage device 1b were connected to the data reading device. That is, the mobile data communications device 1a does not alter the way (e.g. the transfer protocol) in which the data reading device 12 accesses the memory of the regular data storage device 1b. Thereto, the mobile data communications device may comprise a direct connection, sometimes referred to as "bridge", between the first data communications means 2 and the third data communications means 22.

Hereinabove it was explained that the data storage device 1 was provided with a unique identification code. It will be appreciated that the mobile data communications device 1a may also be provided with a unique identification code. The unique identification code may for instance be stored in the processing unit 8.

It is possible that the unique identification code is "hard-coded", i.e. predetermined e.g. during manufacture, in the data storage device 1 or the data communications device 1a. It is also possible that the identification code can be modified by the user. In that case it is for instance possible that the data storage device 1 or the mobile data communications device 1a is provided with a generic identification code until the user enters a, preferably unique, identification code, such as a password and/or user name.

It is possible to assign, e.g. by the user, identical identification codes to a plurality of data storage devices 1 and/or mobile data communications devices 1a. Hence, the respective memories 2 associated with such plurality of data storage devices 1 and/or mobile data communications devices 1a may be managed in synchronism. In line with the example of Fig. 1b it is, thus, for instance possible to simultaneously manage a plurality of memories associated with a plurality of digital photo frames, e.g. located at a plurality of mutually different locations, e.g. at the homes of different relatives.

In an embodiment, the data storage device 1 or the mobile data communication device 1a comprises a subscriber identity module (SIM) card 24 for storing the unique identification code.

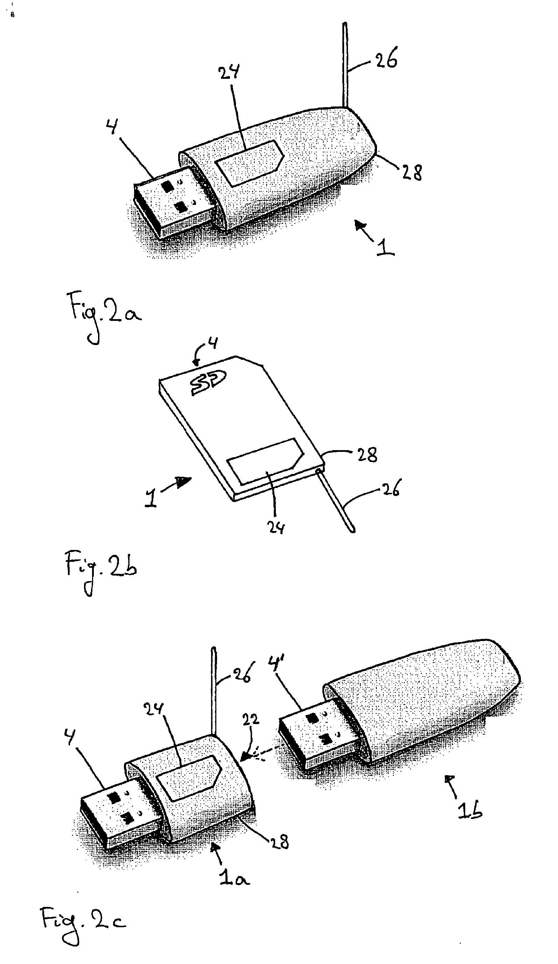

Fig. 2a shows a first embodiment of a data storage 1 device according to the invention. In Fig. 2a the data storage device 1 is designed as a portable external data storage device, in this example a USB-memory stick. The memory stick comprises a male USB-connector 4, as first data communications means, for connection to a data reading device 12, such as a digital photo frame, (car) audio playback device or the like. The data reading device 12 is thereto provided with a female USB-connector. The male USB-connector 4 is connected to the memory 2 and allows the data reading device 12 to access the memory 2.

In the example of Fig. 2a the USB-memory stick 1 comprises a subscriber identity module (SIM) card 24 storing the unique identification code of the USB-memory stick. It will be appreciated that, hence, the unique identification code of the data storage device 1 may be changed by replacing the SIM card 24 with another SIM card. Further, in this example the second data communications means 6 comprise an antenna 26 which extends externally of a housing 28 of the data storage device 1. It will be appreciated that the antenna 26 may also be mounted internally of the housing 28.

Fig. 2b shows a second embodiment of a data storage 1 device according to the invention. In Fig. 2b the data storage device 1 is designed as an SD memory card. The SD memory card comprises an SD-connector 4, as first data communications means, for connection to a data reading device 12, such as a digital photo frame, (car) audio playback device, navigation device or the like. The data reading device 12 is thereto provided with an SD-card receptacle. The SD-connector 4 is connected to the memory 2 and allows the data reading device 12 to access the memory 2.

In the example of Fig. 2b the SD-card 1 comprises a subscriber identity module (SIM) card 24 storing the unique identification code of the SD card. Further, in this example the second data communications means 6 comprise an antenna 26 which extends externally of a housing 28 of the data storage device 1. It will be appreciated that the antenna 26 may also be mounted internally of the housing 28.

Fig. 2c shows an embodiment of an assembly of a mobile data communications device 1a according to the invention and a regular data storage device 1b. In this example the regular data storage device 1b is a regular USB-memory stick. In this example, the mobile data communications device 1a comprises a male USB-connector 4, as first data communications means, for connection to a data reading device 12. In this example the mobile data communications device 1a comprises a female USB connector 22, as third data communications means, for connection to the male USB-connector 4' of the regular USB stick 1b.

It will be appreciated that the mobile communications device 1a shown in Fig. 2c may also be provided with alternative, or additional, first and third data communications means. The first data communications 2 means may e.g. comprise an SD-connector. The third data communications means may e.g. comprise an SD-receptacle.

In the example of Fig. 2c the mobile data communications device 1a comprises a subscriber identity module (SIM) card 24 storing the unique identification code of the mobile data communications device 1a. Further, in this example the second data communications means 6 comprise an antenna 26 which extends externally of a housing 28 of the mobile data communications device 1a. It will be appreciated that the antenna 26 may also be mounted internally of the housing 28.

The invention is by no means limited to the examples described above.

In the examples, the data reading device 12 is digital photo frame, and the data stored in the memory 2 comprises digital images. It will be appreciated that the data storage device 1 and/or the mobile data communications device 1a according to the invention can also be used in conjunction with other data reading devices 12, such as, but not limited to, (car) audio playback devices, video playback devices, digital cameras, navigation devices, etc. The data stored in and/or into the memory may also comprise digital audio or video files, navigational maps and/or routes, etc. It will be appreciated that the data storage device 1 and/or the mobile data communications device 1a can be disconnected from a first data reading device, e.g. the digital photo frame, and connected to a second data reading device, e.g. the car audio playback device, at any time if so desired. Hence the data storage device 1 and/or the mobile data communications device 1a according to the invention provide great versatility.

In the examples data is stored into the memory 2 via the mobile communications network. It will be appreciated that it is also possible to retrieve data stored in the memory 2 via the mobile communications network, e.g. to store said data in a memory of the control unit 20. Hence, it is for instance possible to retrieve digital images stored in the memory 2 of a data storage device 1 (or 1b) by a digital camera via the mobile communications network.

In the example of Fig. 1b the control unit is a computer, e.g. a desktop computer. It is also possible that the control unit is a different device such as a mobile computer, PDA, cellular telephone or the like.

In the example of Fig. 1b the control unit is connected to the mobile communications network sender/receiver station via an internet server. It will be appreciated that the control unit may also be in direct communication with a mobile communications network sender/receiver station of the mobile communications network. Hence, it is for instance possible to send digital images (or audio files or any data) from a cellular phone, acting as control unit, directly to the data storage device and/or mobile data communications device according to the invention via the mobile communications network, e.g. using SMS (Short Message Service) or MMS (Multimedia Messaging Service) format. It is also possible that a mobile client (software application) is run on the cellular phone for managing the memory, e.g. for sending data to the data storage device and/or mobile data communications device and/or retrieving data from the data storage device and/or mobile data communications device. In combination with the use of the substantially omnipresent mobile communications network this provides great versatility, as the location of the data storage device and/or mobile data communications device and the location of the control unit, here the cellular phone, may be chosen and varied at will.

All such variations are understood to fall within the scope of the invention.

## Claims

1. Mobile data communications device comprising
- first data communication means,
- second data communications means and
- a processing unit,
wherein the mobile data communications device is provided with and/or connectable to a data storage device having a memory,
wherein the first data communication means are arranged for communicating data stored in the data storage device to a data reading device,
wherein the second data communications means are arranged for communicating with a mobile communications network, and
wherein the processing unit is arranged for managing data stored in the memory of the data storage device in response to a command or commands sent to the mobile data communications device via the mobile communications network.

2. Mobile data communications device according to claim 1, further comprising third data communications means, wherein the mobile data communications device is connectable to the data storage device via the third data communications means.

3. Mobile data communication device according to claim 1 or 2, wherein the processing unit is arranged for storing data received by the second data communications means into the memory of the data storage device and/or for communicating data stored in the memory of the data storage device to the mobile communications network in response to a command or commands sent to the mobile data communications device via the mobile communications network.

4. Mobile data communications device according to any one of the preceding claims, wherein the second data communications means are arranged to make a communications connection with the internet.

5. Mobile data communications device according to claim 3 and 4, wherein the processing unit is arranged for storing data received from the internet into the memory of the data storage device and/or for communicating the data stored in the memory of the data storage device to the internet in response to a command or commands sent to the mobile data communications device via the internet.

6. Mobile data communications device according to any one of the preceding claims, wherein the first data communications means comprise a wired connector, such as a USB connector and/or SD connector, for connection to the data reading device.

7. Mobile data communications device according to any one of the preceding claims, wherein the second data communications means are arranged to establish a communications connection with a substantially omnipresent mobile communications network, such as GSM, GPRS, UMTS or HSDPA.

8. Mobile data communications device according to any one of the preceding claims, wherein the mobile data communications device is provided with a, preferably unique, identification code for recognising the mobile data communications device within the mobile communications network.

9. Mobile data communications device according to claim 8, comprising a subscriber identity module (SIM) card storing the unique identification code.

10. Mobile data communications device according to at least claim 2, wherein the third data communications means comprise a wired connector, such as a USB connector and/or SD receptacle, for connection to the data storage device.

11. Data storage device comprising
- a memory,
- first data communication means,
- second data communications means, and
- a processing unit,
wherein the first data communication means are arranged for communicating data stored in the memory of the data storage device to a data reading device,
wherein the second data communications means are arranged for communicating with a mobile communications network, and
wherein the processing unit is arranged for managing data stored in the memory of the data storage device in response to a command or commands sent to the mobile data communications device via the mobile communications network.

12. Data storage system comprising
- a control unit and
- a mobile communications network sender/receiver, for instance a substantially omnipresent mobile communications network sender/receiver, such as a GSM, GPRS, UMTS or HSDPA sender/receiver,
wherein the control unit is communicatively connectable to the mobile communications network sender/receiver, further comprising a mobile data communications device according to any one of claims 1-10, and/or
- a data storage device according to claim 11,
wherein the data storage system is arranged to transmit a command or commands from the control unit to the second data communications means via the mobile communications network sender/receiver, for managing the data stored in the memory.

13. Data storage system according to claim 12, wherein the system is arranged for transmitting data from the control unit to the second data communications means and storing said data into the memory and/or for transmitting data stored in the memory to the control unit.

14. Method for managing data in the memory of a data storage device, comprising
- establishing via a mobile communications network, for instance a substantially omnipresent mobile communications network such as GSM, GPRS, UMTS or HSDPA, a data communication with a mobile data communications device according to any one of claims 1-10, and/or
- a data storage device according to claim 11; and
- sending via the mobile communications network a command or commands to the second data communications means, for managing the data stored in the memory.

15. Method according to claim 14, further comprising
- sending data to the data storage device via the mobile communications network, and storing said data into the memory and/or retrieving data from the memory to a remote device via the mobile communications network.
